# EUROPEAN PATENT APPLICATION

(11) **EP 4 382 493 A1**
(43) Date of publication of application: **12.06.2024**
(21) Application number: 22211659.2
(22) Date of filing: 06.12.2022
(51) Int. Cl.: C02F 1/467, C02F 1/461, C02F 103/08

(54) **DEVICE, SYSTEM AND METHOD FOR PREVENTING SCALE**

(71) Applicant: Grant Prideco, Inc., Houston, TX 77036 (US)
(72) Inventor: Ghorbaniyan, Masoud, 4031 Stavanger (NO); Varanko, Yury, 4322 Sandnes (NO)
(74) Representative: Håmsø Patentbyrå AS

(57) **Abstract**

There is disclosed an electrolytic cell for producing an oxidating agent, the electrolytic cell comprising a plurality of anodes and cathodes, wherein the anodes and cathodes are of substantially equal, geometrical shape. There is also disclosed an electrolytic system including such an electrolytic cell as well as an apparatus for cleaning seawater and a method for operating the electrolytic system.

## Description

The present disclosure relates to an electrolytic cell for preventing build-up of scale on the electrolytic cell. In particular, the invention relates to an electrolytic cell having a plurality of anodes and cathodes and to an electrolytic system comprising such an electrolytic cell. The disclosure also relates to a method for preventing build-up of scale on the electrolytic cell as well as to an apparatus for disinfecting and cleaning of seawater, such as for injection into an injection well.

Electrochemical production of oxidants via electro chlorinators and hydroxyl radical generators is well known and widely used in the water treatment industry, where the purpose is to inactivate organics present in the water and thus provide disinfection.

A saltwater chlorinator for water treatment plants traditionally includes an electrolysis cell comprising parallel plates of anodes and cathodes. The saltwater chlorinator generates oxidants such as chlorine, which functions as a disinfecting agent. The main by-products of any saltwater electrolysis process are generation of hydrogen gas (H₂) and precipitation of insoluble salts.

A hydroxyl radical generator is similar to an electro chlorinator, but it has different oxidation/reduction potential and materials on the cathode and anode. Oxidants such as hydroxyl radicals are extremely reactive and will be converted to another chemical molecule within nanoseconds. As such highly reactive radicals are generated at the surface of the electrodes in a hydroxyl radical generator, only water which is close to the electrodes will be treated by these radicals.

Water and oxygen reduction reactions near the cathode cause the release of oxidants and creation of an alkaline environment, while oxidation reactions at the anode cause an acidic environment. If the water contains inorganic ions such as calcium and magnesium, for example as present in sea water, the alkaline environment will typically induce precipitation of these ions, for example of calcium in the form of CaCO₃ and magnesium in the form of Mg(OH)₂. Such precipitate is generally known as scale. The terms "scale", "scaling", "the build up of scale" or the "deposition of scale" are used herein to refer to the deposit of poorly soluble, mainly inorganic compounds such as, but not limited to, calcium carbonate, magnesium hydroxide and calcium sulphate. The particular compounds will depend on the mineral content of the water / aqueous solution in the particular application in which the presently described invention may find utility.

The rate of deposition and type of material deposited on the cathode will depend on the electrical current density and the temperature and chemistry of the water as well as the rate of flow of water through the cell. In the complex case of seawater electrolysis, slightly different materials may be deposited on the cathode due to different growth rates of calcium or magnesium salts. This may result in different physical properties of the deposited material, *e.g.* different hardness, texture, or colour.

Formation of scale is a considerable challenge in the design of seawater chlorinators where precipitation due to chemical reactions forms a deposit on the cathodes of the device, and thereby creates a significant restriction or even plug. Scale growth will over time significantly reduce the cathode contact area and thereby the disinfection efficiency, and increase the pressure drop across the cell due to reduced flow area.

Different methods to deal with the problem of scale formation in addition to lifting the cell out of the water and clean it mechanically have been proposed. For example, US3822017 A discloses an electrical chlorination unit which has scrapers to mechanically remove the scale, US2015233003 AA discloses a method for decreasing the rate of formation of scale by intermittently injecting jets of pressurized water, and US2006027463 AA discloses an electrolytic cell wherein ozonated air bubbles are used to decrease the formation of scale by attracting particles of scale and transporting them away from the electrode. However, these solutions will make the electrochemical cell more complex, and thereby more expensive and prone to malfunction. US5034110 A discloses a self-cleaning chlorinator comprising a power supply which cyclically reverses the polarity at the electrodes to remove the scale deposits. A disadvantage of reversing the polarity is that the electrodes may be damaged, and their lifetime reduced. The reduced lifetime is also exacerbated by the fact that, when cyclically altering the polarity, all electrodes will alternately have to serve as cathodes and anodes, respectively, whereby optimising the design of the different electrode for one specific polarity function is no longer possible. For areas of use where there is easy access to the electrodes for maintenance, such as for cleaning of swimming pools, this may be acceptable. However, for subsea applications where the electrochemical cell may be positioned e.g. at the seabed, which may in worst case be several hundred kilometres offshore at a depth of several kilometres below surface, frequent maintenance may be very costly and highly undesirable.

Production of residual hydrogen at the surface of the cathode has also been shown to be a source of premature failure through hydrogen-induced stress cracking (HISC) / hydrogen embrittlement (HE) of the cathode.

Recent attempts have also been made to coat a cathode with materials that are repellent to inorganic materials and thereby avoid scale build-up. The effect of such repellent coatings has been somewhat limited so far. These repellent coatings have usually been made from hydrophobic and oleophobic materials that are not electrically conductive and therefore had to be made very thin, typically in the sub-micrometre range, in order not to compromise the electrolytic function of the cell. It has therefore been difficult to apply a uniform, sufficiently thin coating without holes, where the holes define nucleation sites for scale build-up. To obtain some effect from such inorganic repellent coatings, it has also been necessary to reverse electrode polarity, which reduces the electrode lifetime as explained above. The inorganic repellent coatings have also shown to be dependent on a certain flow of water in order to provide some effect, meaning that it would not be efficient during a temporary stop in the flow.

The invention has for its object to remedy or to reduce at least one of the drawbacks of the prior art, or at least provide a useful alternative to prior art.

The object is achieved through features, which are specified in the description below and in the claims that follow.

The invention is defined by the independent patent claim, while the dependent claims define advantageous embodiments of the invention.

In a first aspect the invention relates to an electrolytic cell for producing an oxidating agent, the electrolytic cell comprising a plurality of anodes and cathodes, wherein the anodes and cathodes are of substantially equal, geometrical shape. Normally, the electrodes in such an electrolytic cell, which has for its primary function to produce an oxidating agent, will be shaped for optimizing their intended function; either as anode or cathode. Normally, the cathodes were made significantly larger than the anodes. When used in a system, as will be explained below, where the polarity may be reversed at regular intervals, each electrode needs to be able fulfil the function of both anode and cathode. Their design may as such be a trade-off for fulfilling both functions.

In one embodiment, the cathodes and anodes may also be made from the same material and have a substantially equal coating. The material may in some embodiments be titanium (Ti), but other typical electrode materials may also be used, including platinum, graphite, copper, silver, brass, etc. The coating may be a mixed metal oxide (MMO), but other types of electrolytic coating with similar functionality may also be used, including electroplated platinum, boron doped diamond (BDD) etc. In one embodiment, the coating may be an MMO coating with a 50% TiO₂ molar percentage combined with Ruthenium Oxide or Iridium Oxide. The coating area density may be in the order of 10 g/m².

The electrolytic cell may in one embodiment be designed for producing chlorine as the primary oxidating agent. An electrolytic cell designed to primary produce chlorine may inevitably also produce small amounts of other oxidating agents, such as hypochlorite or free hydroxyl radicals. In other embodiments, the electrolytic cell may be designed to produce another oxidating agent as the primary oxidating agent, such as hypochlorite, free hydroxyl radicals, bromine etc. A person of skill in the art will understand the choice of different electrode sizes, materials, coatings, different current and voltage supplies etc, will favour production of different types of oxidating agents, details of which will not be presented herein.

In one embodiment, the electrolytic cell may include a rectangular frame structure, wherein a main portion of the active area of the anodes and cathodes is located below the frame structure. Two sides of the frame structure may include a of pair busbars electrically connecting the electrodes. By lowering the active area of the electrodes to a position below the busbars, the risk of scale accumulating on the electrodes is further reduced, mainly due to reducing the contact area between the electrodes and the busbars and creating a distance between the frame structure and the electrodes. The area of contact between the frame structure and the electrodes has been shown to be an origin of the growth of scale. Reducing the contact area and moving the active electrode area away from the frame, by lowering the electrodes, thus reduces the risk of scale build-up. The vertical gap created between the plane of the frame structure and the top of the electrodes may be filled by means of plates of a non-conductive material, which may further reduce the risk of scale bridging on top of the electrodes in use. Preferably, areas of contact between the electrodes and the frame structure, in particular the busbars, may be coated in a non-conductive material, such as a resin-based mould. Other, non-conductive components of the electrolytic cell, may be made from or covered by materials with reduced ability to accumulate surface charge once immersed in seawater, such as various types of polymers. Many polymers have modifications with reduced ability to accumulate surface charge. Some examples are PEHD (polyethylene High Density), PVC (polyvinyl chloride), PTFE (polytetrafluoroethylene), PVDF (polyvinylidene (di)fluoride), and fluorine resins, etc.

In one embodiment the anodes and cathodes may be arranged in parallel and with a distance between them in the range 5-40 mm, preferably around 20 mm. The applicant has found that a distance in range of 20 mm is optimal for certain flow conditions for producing an appropriate amount of oxidant, such as chlorine, while at the same time reducing the pressure drop over the electrolytic cell. The distance between the electrodes is a primary factor for the electric potential of the electrolytic cell

In a second aspect the invention relates to an electrolytic system for producing an oxidating agent, the electrolytic system comprising an electrolytic cell according to the first aspect of the invention, the electrolytic system further comprising:
- a power supply unit; and
- a control unit for controlling the supply of power from the power supply unit to the electrolytic cell.

In one embodiment, the current density at normal operating conditions of the electrolytic cell may be in the range of 100 to 1000 A/m², preferably 500 A/m² or higher and even more preferably 500-700 A/m²

The power supply unit may typically be connected to busbars of the electrolytic cell, where the anodes and cathodes of the electrolytic cell are electrically connected to respective busbars.

In a third aspect, the invention relates to a method of operating the electrolytic system according the second aspect of the invention, the method including the steps of:
- reversing the polarity of the supply of power to the electrolytic cell at regular intervals, whereby cathodes become anodes and vice versa.

Reversing the polarity of the power supply from the power supply unit is controlled by the control unit. The interval between polar reversals may be in the range 12-72 hours, preferably around 24 hours. The applicant has found that 12-72hours in certain flow conditions may be beneficial switching intervals. For the prevention of scale build-up, a high frequency may be desirable. At the same time, reversing the polarity generates significant loads on the electrodes, reducing their lifetime. At a reversal interval of 12-72 hours, and preferably around 24 hours, only a small/negligible amount of scale is allowed to build up on the cathode before reversing the polarity, after which the scale will flake off from the anode (previously cathode), thus not allowing the scale to accumulate. With longer reversal intervals, it has been shown to be less likely for the scale to flake off after reversal. With shorter reversal intervals, the lifetime of the electrodes is reduced. For a maintenance-free operating lifetime of 4 years or more, 24 hours reversal intervals have been shown to be a possible trade-off. Since the electrodes are identical, there is no downtime for the cycles, i.e. the electrolytic cell is producing the same type and amount of oxidants in both polarities. It should also be noted that if production of other primary oxidants, other than chlorine, is the primary target of the electrolytic system, then other reversal frequencies may be more beneficial. For the production of free hydroxyl radicals, the frequency of reversal may be in the order of 1-2 minutes to minimize hydrogen evolvement.

To reduce the load on the electrodes upon polarity reversal, the step of reversing the polarity from the power supply unit may include the step of ramping down the supply of power from an operating value prior to the reversal and ramping the supply of power back up to the operating value after reversal. As will be understood by a person of skill in the art, the electrolytic cell will accumulate charge during its operating. Even if switching the power supply unit completely off, a certain amount of charge, such as a few volts, will remain in the electrolytic cell and slowly decrease. This "residual" charge may be harmful to the electrodes when subsequently reversing the polarity. Preferably, the ramping of the power supply may be done over a time interval of 1-20 minutes, preferably around 5 minutes, which has been shown to reduce the residual charge and to reduce the load on the electrodes immediately after reversal, while at time reducing operating time at a power supply below normal operating conditions.

In one embodiment, supply of power from the power supply unit to the electrolytic cell may be shut completely off for a period of time immediately before reversing the polarity. Keeping the electrolytic cell idle for a period of time will be beneficial for venting off hydrogen around the cathode (which is about to become the anode) and restoring stable water conditions around the electrodes as well as for reducing the accumulated charge in the electrolytic cell. Still, in certain embodiments it has been found that charge dissipation by passive self-discharging of the electrolytic cell to a "safe level" may take a long time and that it is somewhat unpredictable. Any remaining charge upon reversing the polarity may lead to failure in the power supply. In one embodiment, an active load may be added to the power supply unit board during switch off. The principle of operation may be to shorten the electrodes via an active load when the electrolytic cell is not powered, and to disconnect this active load when the power supply unit again is supplying power to the electrolytic cell (to avoid undesirable power consumption and heat generation). In one embodiment, the active load may be automatically engaged during the ramp down from normal operating conditions to the idle / switched off mode of the power supply unit. The engagement/disengagement of the active load may e.g. be set when the output voltage or current from the power supply unit is below or above, respectively, a certain voltage threshold and/or certain current threshold. In one embodiment, the active load may be switched on / engaged when the output voltage is below 0.8 V or lower and/or the output current is substantially 0A. Similarly, the active load may be switched off / disengaged when the output voltage is above 0.8 V and/or the output current is different from (substantially) 0A. The step of shutting the supply of power completely off, and discharging the electrolytic cell has the double effect of reducing the load on the electrodes upon reversing the polarity as well as venting off hydrogen from the cathode so as to reduce the risk of hydrogen-induced stress cracking and ultimately increase the lifetime of the electrodes.

The active load may be limited to a certain nominal current, such as in the range 5-10 A, preferably around 7A, so the rate of energy consumption is limited (70W max for 7A).

Allowing the electrolytic cell to substantially discharge and hydrogen to vent off before reversing polarity, may significantly increase the lifetime of the electrolytic system, including both the electrodes and the power supply unit.

In one embodiment, the idle / switched off period may be in the range of 1-20 minutes, preferably around 10 minutes, which has been shown to be sufficient when adding an active load.

In a fourth aspect, the invention relates to an apparatus for disinfecting and cleaning seawater, the apparatus including one or more electrolytic systems according to the second aspect of the invention, the apparatus being configured to be positioned below the surface of seawater and to take in surrounding seawater through an inlet, wherein the electrolytic cell(s) is/are positioned at the inlet so that seawater flows into the apparatus past the anodes and cathodes of the electrolytic cell(s).

The apparatus may be for cleaning water to be injected into an injection well.

In a preferred embodiment, the apparatus may comprise a plurality of electrolytic systems at its inlet. Depending on the flow requirements of cleaned water, a plurality of such electrolytic systems may operate in parallel. In certain embodiments, where the flow requirement is 200-300 m³/h, 8-10, in particular 9, such electrolytic systems may operate in parallel. By operating in parallel and making sure that the timing of polarity reversal is different for at least some of the electrolytic systems, a sufficient amount of oxidant, such as chlorine, may be produced at all times even if the discharge function disclosed above is implemented. In one embodiment the apparatus may be provided with a double set of electrolytic cells, implying that if 9 electrolytic cells are required to treat a sufficient volumetric flow of seawater, then 18 cells may be provided for redundancy.

In one embodiment, the inlet of the apparatus may be positioned so that the flow of incoming seawater past the anodes and cathodes has a vertical component. This may be useful for scale, flaking off upon reversal of polarity, falling out of the apparatus and away from the electrolytic cells.

In one embodiment, the apparatus, downstream of the inlet, may include a tank for gravitational filtering of the seawater. Gravitational filtering /sedimentation, by letting water flow slowly through the tank, typically from bottom and up, removes, or a least reduces, the need for filtering by means of membranes and similar. Such membranes may get clogged and generally increases the need for maintenance of the apparatus.

In other embodiments, the electrolytic system may be used other types of processes / in other types of apparatuses where treatment / pre-treatment of seawater is important for the quality and outcome downstream process. This may be for supply of water used for electrolysis for the production of hydrogen. In one embodiment, the electrolytic cell may be used in combination with an offshore wind turbine, providing the power needed to drive the electrolysis and, optionally also the power the drive the electrolytic cell. The apparatus used for providing water for electrolysis may be of the same type as the one used for treating water for injection into an injection well.

In the following is described examples of preferred embodiments illustrated in the accompanying drawings, wherein:
- Fig. 1: shows, in a top view, an electrolytic cell according to the invention;
- Fig. 2A: shows the electrolytic cell from Fig. 1 in a cross-sectional side view through the line A-A;
- Fig. 2B: shows a portion of the electrolytic from Fig. 1 in cross-sectional side view from the line B-B;
- Fig. 3: shows in partially cut-away perspective view, an alternative embodiment of an electrolytic cell according to the invention;
- Fig. 4: shows in a partially cut-away view, the electrolytic cell from Fig. 1.;
- Fig. 5A: shows a first exemplary embodiment of an apparatus for cleaning seawater according to the invention;
- Fig. 5B: shows a second exemplary embodiment of an apparatus for cleaning sweater according to the invention.
- Fig. 6A: shows the amount of free chlorine as a function of time in a first experimental set-up;
- Fig. 6B: shows the amount of free chlorine as a function of time in a second experimental set-up;
- Fig. 7A: shows current and voltage as a function of time in an experimental set-up during reversing polarity from negative to positive; and
- Fig. 7B: shows current and voltage as a function of time in an experimental set-up during reversing polarity from positive to negative.

In the following, reference numeral 1 will be used to denote an electrolytic cell, while reference numerals 10 and 100 will be used to denote an electrolytic system and an apparatus for cleaning seawater, respectively. Identical reference numerals refer to identical or similar features in the drawings. The figures and drawn highly schematic and simplified, and various features therein are not necessarily drawn to scale. Any positional indications refer to the position shown in the figures.

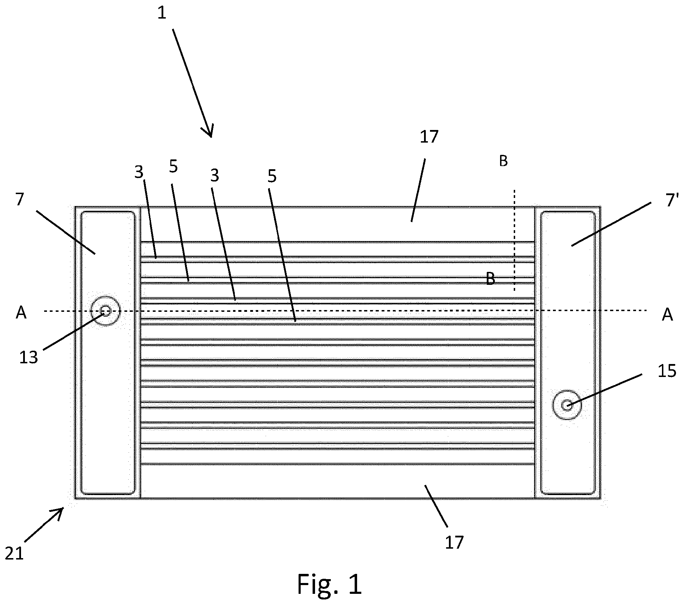

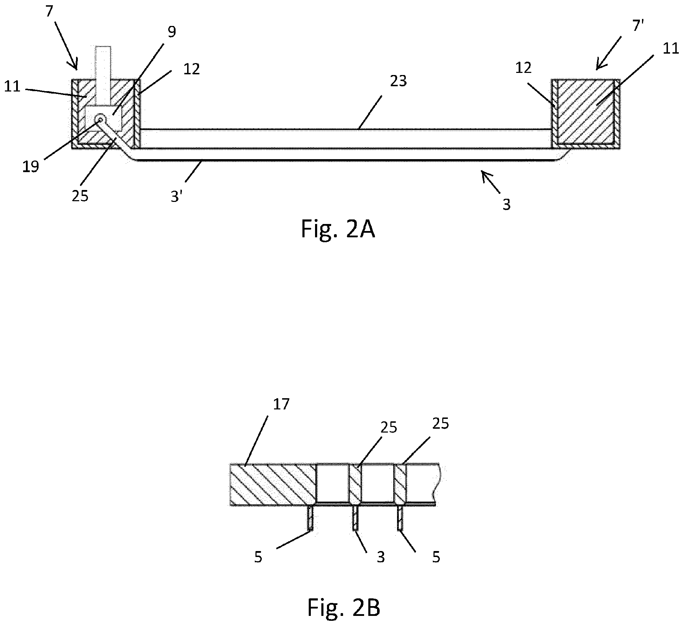

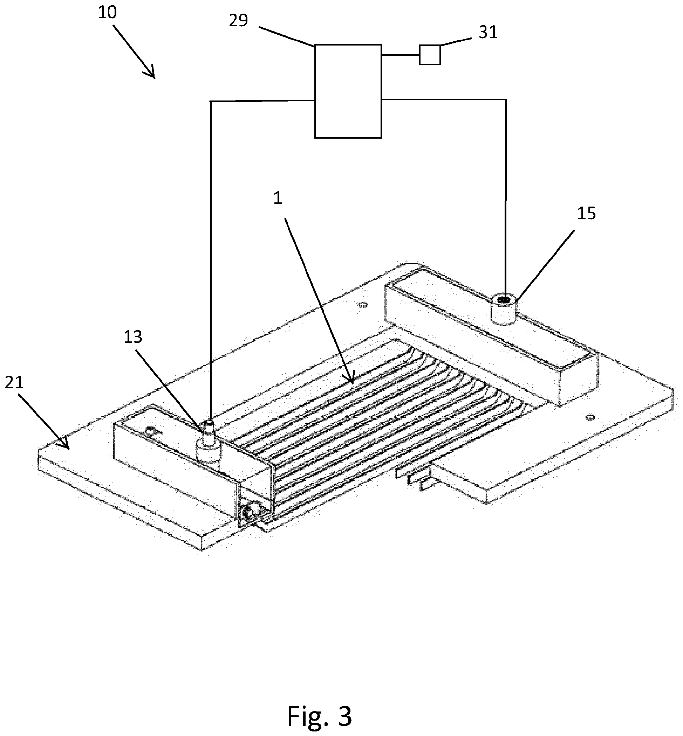

Reference is first made to Figs. 1, 2A and 2B. Fig.1 shows a top view of an electrolytic cell 1 according to the invention, while Figs. 2A and 2B show cross-sectional side views as seen through the lines A-A and B-B, respectively, from Fig.1. A plurality of electrodes 3, 5 are shown extending in parallel between side bars 7, 7'. The distance between each electrode 3, 5 in the shown embodiment is approximately 20 mm. As explained herein, the electrodes 3, 5 will alternately serve as cathodes 3 and anodes 5. One set of electrodes 3 is connected to a first busbar 9 on one of the side bars 7, while the other set of electrodes 5 is connected a second, not directly shown, busbar on the other of the side bars 7'. In the shown embodiment, each of the electrodes 3, 5 are of equal shape, made from Titanium and coated with a mixed metal oxide (MMO). The busbars 9 have not shown corrugated shapes enabling connecting to every second electrode on each side bar 7, 7' so as to define a positive side and a negative side. The side bars 7, 7' are filled with a polyurethane resin mould 11 encapsulating / protecting the busbars 9, the resin mould being covered by a plastic material 12, such as PVC or PTFE. In the shown embodiment, the electrodes 3, 5 are connected to the busbars by means of bolt connections 19. Bolt connections 19 simplify change of components and avoid welds, which have been shown to negatively affect the production of scale. External connectors 13, 15 connect each of the busbars 9 to a power supply unit 29, as will be explained with reference to Fig. 3A. The side bars 7, 7', together with end bars 17, 17' define a rectangular frame structure 21 surrounding the electrodes 3, 5. An active portion 3', 5' of the electrodes 3, 5 are provided at vertical position below the frame structure 21 in use. More precisely, the active portion 3', 5' are located below a horizontal plane defined by the lower portion / bottom of the frame structure 21. In the embodiment of Figs. 2A and 2B, a vertical gap between an upper part of the active portion 3', 5 'of each electrode 3, 5 is provided with a non-conductive plate 23, which may be useful to avoid bridging of scale on top of the electrodes 3, 5. The non-conductive plate 25 may be made from a plastic material such as polyethylene, PVC or PTFE. Each electrode 3, 5 is connected to its respective busbar 9 with an angled portion 25 connecting the active portions 3', 5' with their respective busbars 9.

Fig. 3 shows a first embodiment of an electrolytic system 10 according to the invention. The electrolytic cell 1 is similar to the one shown in the Figs. 1, 2A and 2B, with the only difference being that the vertical gap between the upper part of the electrodes 3, 5 is not filled with a non-conductive plate but is empty. The external connectors 13, 15 connect each busbar 9, and thereby each set of electrodes 3, 5, to a power supply unit 29 which is shown highly schematically in the figure. The power supply unit is being controlled by means of a control unit 31. In the shown embodiment, the control unit 31 is shown as external to the power supply unit 29 but may equally well be integrated with integrated with the power supply unit 29. In use subsea, the power supply unit 29 and/or control unit 31 may be provided in an atmospheric cannister filled with an inert gas, such as N₂. In certain embodiments, the power supply unit 29 may be designed to provide 4-8 V at 20-60 A, preferably around 5-6 V at 30-40 A. Depending on the size of the electrodes, this may correspond to a current density of approximately 700A/m². The power supply unit 29 may be designed to work on both AC and DC as input, such as 250V AC and 400VDC and to communicate on RS-485 and CanBus to a high level of integrity.

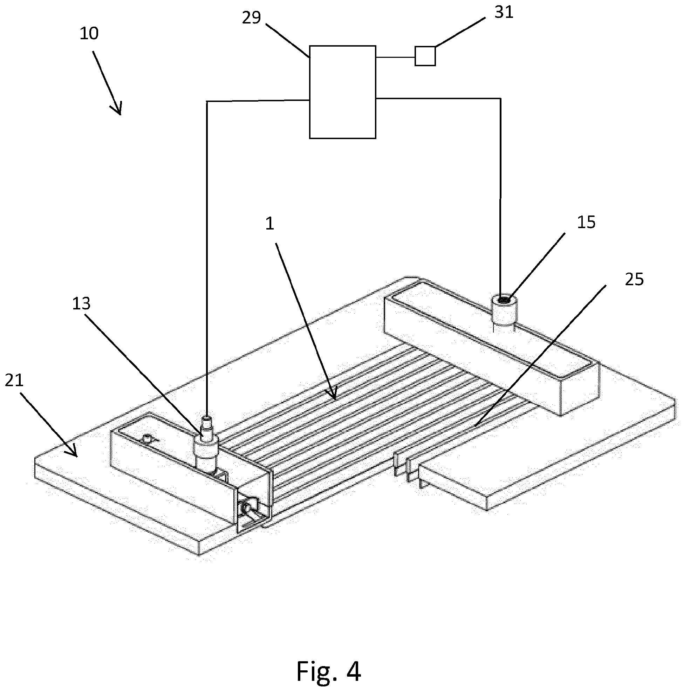

Fig. 4 shows a perspective view of the electrolytic cell 1 from Figs. 1, 2A and 2B as included in an electrolytic system 10. As for Fig. 3, the power supply unit 29 and control unit 31 are shown highly schematically.

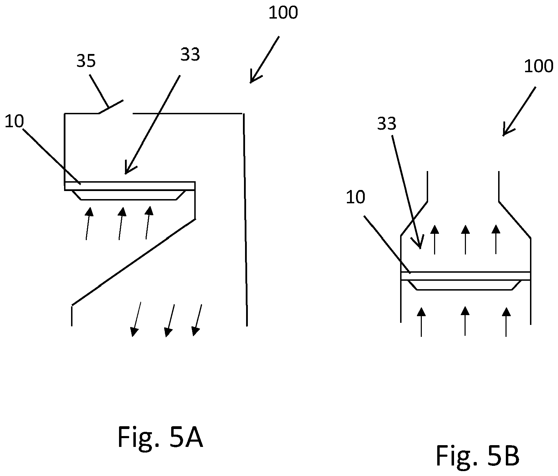

Figs. 5A and 5B show, in a highly schematic manner, a part of an apparatus 100 for cleaning of seawater. An electrolytic system 10 is shown provided at an inlet 33 of the apparatus 100, whereby a stream of uncleaned seawater flows into the apparatus 100 past the electrolytic system 10. In not shown embodiments, a plurality of such electrolytic systems 10 may be provided at the inlet 33 of the apparatus 100. Typically, two or more such electrolytic systems 10 may be operating in parallel. Preferably, the seawater is filtered and otherwise treated downstream of the inlet before being used for its intended purpose. In a preferred embodiment, the seawater, downstream of the electrolytic system 10, may flow into a not shown tank for gravitational filtering of the seawater. In the embodiments of both Fig. 5A and 5B, the flow of seawater past the electrolytic system 10 is vertical (Fig. 5B) or at least partially vertical (Fig. 5A). The vertical flow component /orientation of the electrolytic cells 1 is beneficial so that scale, flaking off during reversing the polarity, as explained herein, falls out of the apparatus 100, away from the flow of seawater. In Fig. 5A a hatch 35 is shown, which may be useful for venting off hydrogen during a discharging process when reversing the polarity. Instead of a hatch 35, one or more smaller venting holes may be used.

### Experiments

A first and second experimental set-up, using electrolytic systems 10 according to the invention, was tested over a 6 months' period in realistic operating conditions. The first experimental set-up used an electrolytic cell 1 and system 10 and shown in Figs. 1, 2A, 2B and 4, while the second experimental set-up used an electrolytic cell 1 and system 10 as shown in Fig. 3. The flow of water through each cell 1 was in the order of 15m³/h. The input to the power supply unit was 250V AC with a max power consumption of 400W and an output voltage of ± 0,8-10V DC. The control unit sent commands to the power supply unit over a serial communication link (RS 485) to organize the output of the power supply unit. 12 electrodes were used in each electrolytic cell and the distance between them was 20 mm. The dimension of the active area was 430 x 12 x 2 mm. A PEHD polymer was used to cover nonactive surfaces to reduce the accumulation of surface charge thereon.

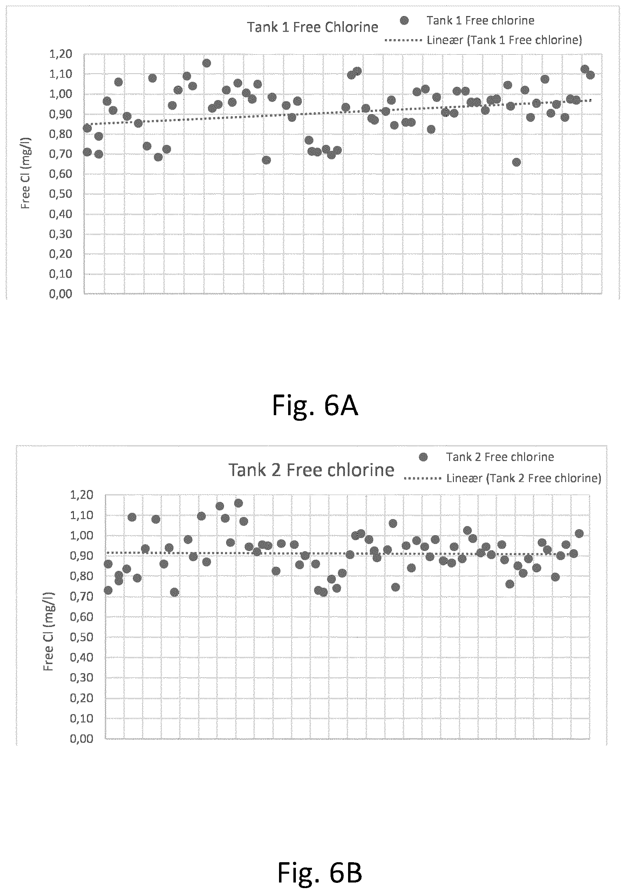

Figs. 6A and 6B show the measured free chlorine as function of time of the six months' testing period for the first and second experimental set-up. The free chlorine was measured both with a Hach DPD1 sensor and CRIUS^{®} online monitoring. The data presented in Figs. 6A and 6B is taken from the Hach sensor, while the Crius was used for verification. The reversal frequency was set to 24 hours, with 5 minutes of ramping down/up, 10 minutes idle/discharge and 5 minutes ramping up/down. As can be seen from both figures, the, the production of free chlorine is stable at an average of approximately 0.9 mg/l. At the beginning of the experiments, i.e. at day 1, the operating voltage of each of the cells was 4.4 V. After 6 months of testing, the operating voltage was substantially the same, i.e. 4.4 V. The cells 1 showed no or only a negligible build-up of scale, which also corresponds to the stable production of free chlorine.

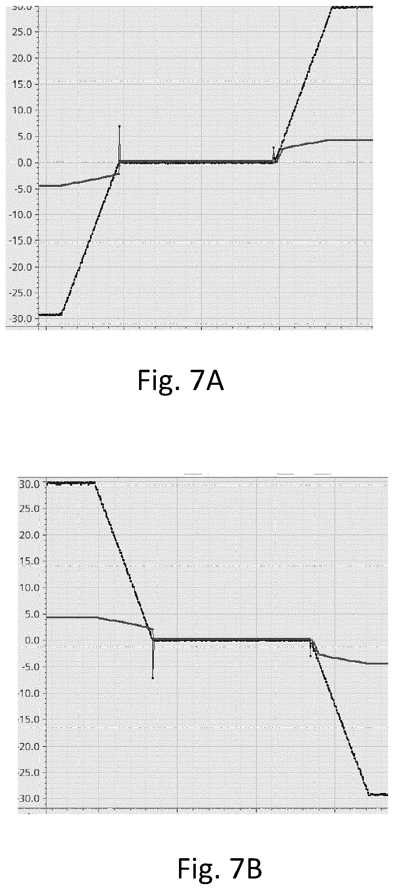

Figs. 7A and 7B show voltage and current as a function of time during reversal of polarity.

Also, a third experimental set-up was run in parallel with the first and second set-ups. The configuration of the third set-up was identical to that of the first setup, with the only difference that the frequency of polar reversal was 8 times higher than that of set-ups 1 and 2. The higher frequency was used to, over a period of six months, to expose the electrolytic system to the number of polar reversals that would be expected over a normal operation of 4 years. The experiments showed that the performance of the electrolytic system was stable with an appurtenant stable production of free chlorine and stable voltage and current levels, indicating that the electrodes used in the set-ups are suitable for extended use subsea without requiring maintenance.

A person skilled in the art will understand that the figures are just principal drawings. The relative proportions of individual elements may also be distorted.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

The control unit as included in a system according to the invention may be implemented by means of hardware comprising several distinct elements, and by means of a suitably programmed computer. In the device claim enumerating several means, several of these means may be embodied by one and the same item of hardware.

## Claims

1. Electrolytic cell for producing an oxidating agent, the electrolytic cell comprising a plurality of anodes and cathodes, **characterised in that** the anodes and cathodes are of substantially equal, geometrical shape.

2. Electrolytic cell according to claim 1, wherein the cathodes and anodes are made from the same material and have a substantially equal coating.

3. Electrolytic cell according to claim 2, wherein the cathodes and anodes are made from titanium (Ti) and/or the coating is a mixed metal oxide (MMO).

4. Electrolytic cell according to any one of the preceding claims, wherein the electrolytic cell includes a rectangular frame structure, wherein a main portion of the active area of the anodes and cathodes is located below the frame structure.

5. Electrolytic cell according to any one of the preceding claims, wherein the anodes and cathodes are arranged in parallel and wherein the distance between the anodes and cathodes is in the range 5-40 mm, preferably around 20 mm.

6. Electrolytic system for producing an oxidating agent, the electrolytic system comprising an electrolytic cell according to any one of the preceding claims, the electrolytic system further comprising:
- a power supply unit; and
- a control unit for controlling the supply of power from the power supply unit to the electrolytic cell.

7. Method of operating an electrolytic system according to claim 6, the method including the steps of:
- reversing the polarity of the supply of power to the electrolytic cell at regular intervals, whereby cathodes become anodes and vice versa.

8. A method according to claim 7, wherein the interval between reversals is in the range 12-72 hours, preferably around 24 hours.

9. Method according to claim 7 or 8, wherein the step of reversing the polarity of the power supply includes the step of ramping down the supply of power from an operating value prior to the reversal and ramping the supply of power back up to the operating value after reversal.

10. Method according to claim 9, wherein ramping of the power supply is done over a time interval of 1-20 minutes, preferably around 5 minutes.

11. Method according to any one of the claims 7-10, wherein after the supply of power is shut off for a period of time immediately before reversing the polarity.

12. Method according to claim 11, where in the idle period is in the range of 1-20 minutes, preferably around 10 minutes.

13. Apparatus for disinfecting and cleaning seawater, the apparatus including one or more electrolytic systems according to claim 6 and being configured to be positioned below the surface of seawater and to take in surrounding seawater through an inlet, wherein the electrolytic cell(s) is/are positioned at the inlet so that seawater flows into the apparatus past the anodes and cathodes of the electrolytic cell(s).

14. Apparatus according to claim 13, wherein inlet is positioned so that the flow of incoming seawater past the anodes and cathodes has a vertical component.

15. An apparatus according to claim 13 or 14, wherein the apparatus, downstream of the inlet, includes a tank for gravitational filtering of the seawater.
